# EUROPÄISCHE PATENTANMELDUNG

(11) **EP 1 058 012 A1**
(43) Veröffentlichungstag der Anmeldung: **06.12.2000**
(21) Anmeldenummer: 99109746.0
(22) Anmeldetag: 18.05.1999
(51) Int. Cl.: F16B 13/14

(54) **Vorrichtung zur Erstellung eines Verbundankers in hohlen Bauteilen**

(71) Anmelder: CHEMOFAST ramcord Befestigungssysteme GmbH, 47877 Willich (DE)
(72) Erfinder: Korte-Jungermann, Hans-Werner, 47877 Willich (DE)
(74) Vertreter: Bonsmann, Manfred, Dipl.-Ing.

(57) **Zusammenfassung**

Die Erfindung betrifft eine Vorrichtung zur Herstellung eines Verbundankers in einem hohlen Bauteil (1), wobei die Vorrichtung einen Ankerbolzen (4) umfaßt, welcher entlang seiner Längsachse eine Axialbohrung aufweist. Die Axialbohrung ist nach außen hin durch Radialöffnungen offen. Durch die Axialbohrung kann Klebemasse in den Ankerbolzen (4) eingespritzt werden, welche durch die Radialöffnungen in die Hohlräume (2) austritt. Vorzugsweise wird der Ankerbolzen (4) von einer Siebhülse (18) umgeben, welche die austretende Klebemasse umhüllt.

## Beschreibung

Die Erfindung bezieht sich auf eine Vorrichtung zur Erstellung eines Verbundankers in einem hohlen Bauteil, enthaltend einen Ankerbolzen mit einem Innenabschnitt, welcher im eingesetzten Zustand im Bauteil zu liegen kommt und dort durch eine in die Hohlräume des Bauteiles eindringende Klebemasse fixiert wird.

Verbundanker der genannten Art dienen dazu, nutzbare Ankopplungspunkte für die Befestigung von Gegenständen an einem Bauteil zu schaffen. Üblicherweise handelt es sich bei dem Bauteil um eine Gebäudewand oder -decke, welche im Inneren Hohlräume aufweist. Diese können bei massiven Wänden z.B. durch Hohlblocksteine, Gitterziegel oder Lochsteine entstehen oder bei Leichtbauwänden wie z.B. Rigips-Wänden oder dergleichen konstruktionsbedingt sein. Zur Herstellung eines Verbundankers mit einem solchen hohlen Bauteil wird bei vielen Verfahren zunächst ein Bohrloch in das Bauteil eingebracht und anschließend ein Ankerbolzen mit Hilfe einer Klebemasse in den Hohlräumen des Bauteils fixiert.

Um den Verbrauch an Klebemasse zu reduzieren und eine unkontrollierte Verteilung der Klebemasse in den Hohlräumen zu vermeiden, 'ist es ferner bekannt, als erstes Element einen Grundkörper umgeben von einem sackförmigen elastischen Schlauch, der sogenannten "Siebhülse", in das Bohrloch einzuführen. Danach wird in den Grundkörper bzw. die Siebhülse eine vorgegebene Menge an Klebemasse eingefüllt und dort hinein der Ankerbolzen, z.B. ein Gewindebolzen, geschoben, wobei ein Abschnitt des Ankerbolzens außerhalb des Bohrlochs verbleibt. Beim Einschieben des Ankerbolzens verdrängt dieser die Klebemasse, die durch die Öffnungen des Grundkörpers hindurchgedrückt wird. Der elastische Schlauch wird durch die aus dem Grundkörper austretende Klebemasse aufgeweitet, bildet deren äußere Umgrenzung und kommt zur Anlage gegen Innenwandungen des hohlen Bauteils. Ohne den Schlauch wurde die Klebemasse im Hohlraum verloren gehen bzw. müßte der Hohlraum vollständig mit Klebemasse gefüllt werden. Die Siebhülse kann aus einem elastischen Gewebe bestehen, welches für den Kleber geringfügig durchlässig ist. Das angestrebte Zurückhalten der Masse des Klebers wird hierdurch nicht beeinträchtigt. Wenn die Klebemasse ausgehärtet ist, wird auf den aus dem Bohrloch vorragenden Abschnitt des Gewindebolzens ein Bauteil aufgeschoben und eine Mutter aufgeschraubt und der Gewindebolzen gegen den aufgeweiteten Schlauch verspannt. Nachteilig ist bei den vorbekannten Vorrichtungen bzw. Siebhülsen, daß die Klebemasse dadurch, daß der Ankerbolzen beim Einsetzen die Klebemasse vor sich herschiebt, zum größten Teil lediglich im hinteren Bereich des Grundkörpers aus den Öffnungen austritt, so daß im vorderen Bereich des Grundkörpers, d.h. im Anfangsbereich des Bohrloches der Ankerbolzen nicht befestigt ist. Dieser Bereich ist jedoch der am meisten beanspruchte Bereich der Verankerung, so daß gerade hier eine Verklebung notwendig ist. Bei den bekannten Vorrichtungen kann aufgrund unzureichender Verklebung der Ankerbolzen sich in dem Bohrloch lösen bzw. losgedreht werden, wenn eine Belastung, beispielsweise ein Torsionsmoment, aufgebracht wird. Ein weiterer Nachteil besteht darin, daß bekannte Siebhülsen große Bohrlochdurchmesser erfordern, da das Bohrloch den Ankerbolzen und die Siebhülse aufnehmen muß und zusätzlich ausreichend Raum zwischen Ankerbolzen und Siebhülse lassen muß, damit sich die Klebemasse durch diesen Raum bis zur Spitze des Ankerbolzens hin ausbreiten kann. Ein dermaßen vergrößertes Bohrloch ist zum einen aufwendiger in der Herstellung und verringert andererseits die Stabilität der Verankerung.

Wenn ein Ankerbolzen ohne Siebhülse in einem Bohrloch verklebt werden soll, ist eine gleichmäßige Verteilung der Klebemasse um den Ankerbolzen herum kaum zu erreichen. Entweder müßten die gesamten Hohlräume vor dem Einbringen des Ankerbolzens mit einem unvertretbar hohen Verbrauch an Klebemasse ausgefüllt werden, oder es besteht immer die Gefahr, daß sich die Klebemasse im Bereich der Mündung des Bohrloches konzentriert und der Ankerbolzen daher nicht ausreichend im Bohrloch fixiert wird.

Der vorliegenden Erfindung liegt daher die Aufgabe zugrunde, eine gattungsgemäße Vorrichtung derartig zu verbessern, daß die Erstellung des Verbundankers einerseits einfacher durchzuführen ist und andererseits zu einem Verbundanker höherer Stabilität führt.

Diese Aufgabe wird durch eine Vorrichtung zur Erstellung eines Verbundankers in einem hohlen Bauteil gelöst, welche in bekannter Weise einen Ankerbolzen mit einem Innenabschnitt enthält, wobei der Innenabschnitt im eingesetzten Zustand des Ankerbolzens im Bauteil zu liegen kommt und dort durch eine in die Hohlräume des Bauteils eindringende Klebemasse fixiert wird. Erfindungsgemäß ist die Vorrichtung dadurch gekennzeichnet, daß der Ankerbolzen eine Axialbohrung sowie mindestens eine Radialbohrung aufweist, wobei die Radialbohrung das Äußere des Ankerbolzens mit der Axialbohrung verbindet und im Bereich des Innenabschnittes des Ankerbolzens angeordnet ist.

Unter "Axialbohrung" ist zu verstehen, daß die Bohrung parallel zur Längsachse des Ankerbolzens verläuft. Vorzugsweise verläuft sie zentral (mittig) durch den Ankerbolzen. Die Axialbohrung beginnt an dem Kopfende des Ankerbolzens, welches im eingesetzten Zustand im Bereich der Mündung des Bohrloches zu liegen kommt. In der Regel wird die Axialbohrung ein Sackloch sein, d.h. nicht bis zur Spitze des Ankerbolzens durchgehen.

Unter "Radialbohrung" wird eine Bohrung verstanden, welche im wesentlichen senkrecht zur Längsachse des Ankerbolzens verläuft. Bei einem zylindrischen Ankerbolzen verläuft sie daher in Richtung eines Radius. Die Radialbohrung stellt eine Verbindung von der Außenseite des Ankerbolzens zur Innenbohrung her.

Die Vorteile der erfindungsgemäßen Vorrichtung werden deutlich, wenn man ihre Verwendung zur Erstellung eines Verbundankers betrachtet. Dabei wird zunächst in herkömmlicher Weise ein Bohrloch in das Bauteil eingebracht, welches den Verbundanker tragen soll. In dieses Bohrloch wird sodann der erfindungsgemäße Ankerbolzen eingesetzt. Der Durchmesser des Bohrloches muß dabei gerade soviel größer als der Ankerbolzen sein, daß dieser ohne zu großen Widerstand einführbar ist. Typischerweise ist es ca. 2 mm größer zu wählen als der Außendurchmesser des Ankerbolzens. Sodann wird auf den außerhalb des Bauteils liegenden Kopf des Ankerbolzens eine Spritzvorrichtung für eine Klebemasse aufgesetzt und eine gewünschte Menge der Klebemasse unter Druck in die Axialbohrung des Ankerbolzens eingeleitet. Die Klebemasse breitet sich entlang der Axialbohrung im Ankerbolzen aus und tritt im Inneren des Bauteils durch die Radialbohrung(en) aus dem Ankerbolzen aus. Sie verteilt sich dabei um den Ankerbolzen herum und in den Hohlräumen des Bauteils hinein und sorgt nach ihrem Aushärten für eine Fixierung des Ankerbolzens. Der Vorteil dieses Verfahrens liegt darin, daß durch die Anordnung der Radialbohrung(en) im Ankerbolzen genau vorherbestimmt werden kann, an welchen Stellen Klebemasse aus dem Ankerbolzen austreten und für eine Verankerung sorgen soll. So kann vermieden werden, daß sich die Klebemasse wie bei bekannten Vorrichtungen in Teilabschnitten der Bohrung konzentriert. Bei den bisher bekannten Systemen wurde einfach Klebemasse vorher zusammen mit einer Siebhülse in das Bohrloch gegeben. Die Klebemasse hat sich dann bei Einführen des Ankerbolzens ungleichmäßig verteilt, insbesondere wurde sie nach hinten durchgeschoben. Im Gegensatz dazu kann bei der erfindungsgemäßen Vorrichtung erzwungen werden, daß von der Mündung des Bohrloches bis zur Spitze des Ankerbolzens überall eine ausreichende Menge an Klebemasse austritt. Ferner erhöht sich die Stabilität des Verbundankers dadurch, daß der Ankerbolzen in einem engen Bohrloch sitzt. Vorteilhaft ist darüber hinaus, daß das Verfahren zur Erstellung des Verbundankers sehr schnell und einfach durchführbar ist und kein besonders geschicktes Hantieren mit der Klebemasse erfordert.

In der Regel wird der Ankerbolzen mehr als eine Radialöffnung haben, damit die Klebemasse an mehreren Stellen aus dem Ankerbolzen austreten kann und diesen somit in einem großen Bereich fixiert. Vorzugsweise sind dabei mehrere Radialöffnungen in axialer Richtung über den Innenabschnitt des Ankerbolzens verteilt, damit Klebemasse von der Spitze des Ankerbolzens bis zur Mündung des Bohrloches für eine Fixierung des Bolzens sorgt. Weiterhin sind die Radialöffnungen auch winkelmäßig um den Umfang des Ankerbolzens herum verteilt, damit Klebemasse in alle Richtungen (oben, unten, zur Seite) austreten kann.

Weitere Vorteile sind erzielbar, wenn bei einem Ankerbolzen mit mehreren Radialöffnungen deren axiale Dichteverteilung und/oder ihr Durchmesser variiert. Das heißt, daß die Anzahl der Radialöffnungen pro Flächeneinheit bzw. die Querschnittsfläche der Radialöffnungen sich in Abhängigkeit von ihrer Position entlang der Achse des Ankerbolzens verändert. Denkbar ist auch eine Veränderung dieser Größen in Abhängigkeit von der Winkelstellung, so daß z.B. "nach oben" (gegen die Schwerkraft) mehr bzw. größere Radialöffnungen vorhanden sind, als "nach unten" (in Richtung der Schwerkraft). Durch die Dichte bzw. den Durchmesser der Radialöffnungen kann beeinflußt werden, wieviel Klebemasse an einer bestimmten Stelle des Ankerbolzens austritt. Vorzugsweise sind daher die Dichte und/oder der Durchmesser der Radialöffnungen so gewählt, daß diese Größen mit wachsender Tiefe im Bauteil zunehmen. An der Spitze des Ankerbolzens sind daher mehr bzw. größere Radialöffnungen angeordnet, als im Bereich der Mündung des Bohrloches. Der Austritt von Klebemasse an der Spitze des Ankerbolzens wird daher erleichtert, so daß der Druckabfall in der Klebemasse, welcher sich bei deren Einspritzen entlang der Axialbohrung einstellt, hierdurch ausgeglichen wird und entlang des gesamten Ankerbolzens ein gleichmäßiger Austritt von Klebemasse stattfindet.

In einer bevorzugten Ausgestaltungsform besitzt der Ankerbolzen einen Außenabschnitt, welcher im eingesetzten Zustand des Ankerbolzens außerhalb des Bauteils zu liegen kommt und daher für Befestigungszwecke zugänglich und nutzbar ist. Vorzugsweise weist dieser Außenabschnitt des Ankerbolzens ein Außengewinde auf, mit dessen Hilfe gewünschte Gegenstände befestigt werden können.

Gemäß einer Weiterbildung der Erfindung werden die Radialöffnungen des Ankerbolzens von außen durch einen elastischen Schlauch abgedeckt. Dieser Schlauch erfüllt eine ähnliche Funktion wie die aus dem Stand der Technik bekannte Siebhülsen, d.h., er verhindert ein ungehemmtes und unkontrolliertes Ausbreiten der Klebemasse im Hohlkörper. Aufgrund seiner Elastizität erlaubt der Schlauch jedoch, daß sich die Klebemasse ein Stück weit in den Hohlkörper hinein ausdehnt, wobei sie indes in der Nähe des Ankerbolzens verbleibt und somit für dessen Fixierung im Bauteil sorgt. Vorzugsweise sind der Anfang und/oder das Ende des (zylinderförmigen) elastischen Schlauches rundum dicht mit dem Ankerbolzen verbunden. Hierdurch wird erreicht, daß Klebemasse, welche am Kopf des Ankerbolzens in die Axialbohrung eingeleitet wird, grundsätzlich in dem elastischen Schlauch gefangen ist. Dabei ist zu beachten, daß es sich bei dem Schlauch auch um ein teilweise durchlässiges Gewebe handeln kann. Dieses Gewebe bildet ähnlich einem Strumpf feine Maschen aus, durch die ein kleiner Teil der Klebemasse hindurchtreten kann, um den Strumpf bzw. Schlauch von außen zu benetzen, so daß zum einen die Bindung zwischen Schlauch und Gewebe verbessert wird und zum anderen eine Haftung an Innenwänden der hohlen Bauteile ermöglicht wird. Ferner hat ein solches Gewebe gegenüber einem vollständig dichten Schlauch den Vorteil, daß es den Durchtritt von Luft ermöglicht, welche beim Eindringen der Klebemasse in den Ankerbolzen verdrängt wird.

Gegenüber den bekannten Siebhülsen hat der erfindungsgemäße Ankerbolzen mit dem elastischen Schlauch den Vorteil, daß die Klebemasse nicht in einem Zwischenraum zwischen Ankerbolzen und Schlauch vordringen muß, sondern durch das Innere des Ankerbolzens geleitet wird. Zwischen Ankerbolzen und Schlauch muß daher kein entsprechender Zwischenraum freigehalten werden, so daß die Bohrung im Bauteil entsprechend enger ausgebildet werden kann. Hierdurch erhöht sich zusätzlich die Stabilität des herzustellenden Verbundankers.

Gemäß einer speziellen Ausgestaltung der Erfindung besitzt der elastische Schlauch an mindestens einem Ende eine formstabile Fassung, welche mit dem Ankerbolzen verbunden werden kann. Über diese Fassung wird somit die oben genannte dichte Verbindung zum Ankerbolzen hergestellt. Vorzugsweise besitzt der Schlauch an beiden Enden derartige Fassungen. Von diesen kann eine als geschlossene Kappe ausgebildet sein, welche an der Spitze des Ankerbolzens zu befestigen ist. Die genannten formstabilen Fassungen erleichtern bei der Herstellung der Vorrichtung das Anbringen des elastischen Schlauches am Ankerbolzen.

Bei der zuletzt genannten Ausführungsform kann eine formstabile Fassung als ringförmiger Kragen ausgebildet sein, welcher in der Mündung des Bohrloches zu liegen kommt und welcher zur Mündung des Bohrloches hin konisch aufgeweitet ist. Dieser Kragen bildet somit den Anschluß zwischen dem Ankerbolzen und der Mündung des Bohrloches und sorgt für einen festen zentrierten Sitz des Ankerbolzens. Vorzugsweise endet die konische Aufweitung in einem ringförmigen Flansch, welcher als Anschlag dient und von außen nach Art einer Unterlegscheibe auf dem Rand des Bohrloches aufsitzt.

Zur Erhöhung des festen und drehsicheren Sitzes des Ankerbolzens im Bohrloch kann der zuletzt genannte, konisch aufgeweitete Kragen sternförmig mit Rippen ausgestaltet sein, welche nach außen hin freistehen und in Kontakt mit der Mündung des Bohrloches kommen.

Vorteilhafterweise ist die Außenoberfläche des Innenabschnittes des Ankerbolzens ganz oder teilweise aufgerauht.

Die Oberfläche erhält dadurch eine dreidimensionale Struktur, welche ein besseres Anhaften der Klebemasse ermöglicht.

Die erfindungsgemäße Vorrichtung kann aus verschiedenen Materialien hergestellt werden, wobei der Ankerbolzen vorzugsweise aus Metall, insbesondere aus Kupfer, Messing oder Stahl hergestellt ist. Der elastische Schlauch und die formstabilen Fassungen sind vorzugsweise aus Kunststoff hergestellt.

Die Erfindung wird nachfolgend anhand der Zeichnungen beispielhaft erläutert.

Figur 1 zeigt vier Stadien der Erstellung eines Verbundankers mit der erfindungsgemäßen Vorrichtung.

Figur 2 zeigt eine Seitenansicht des elastischen Schlauches und des Ankerbolzens sowie einen Längsschnitt durch den Ankerbolzen.

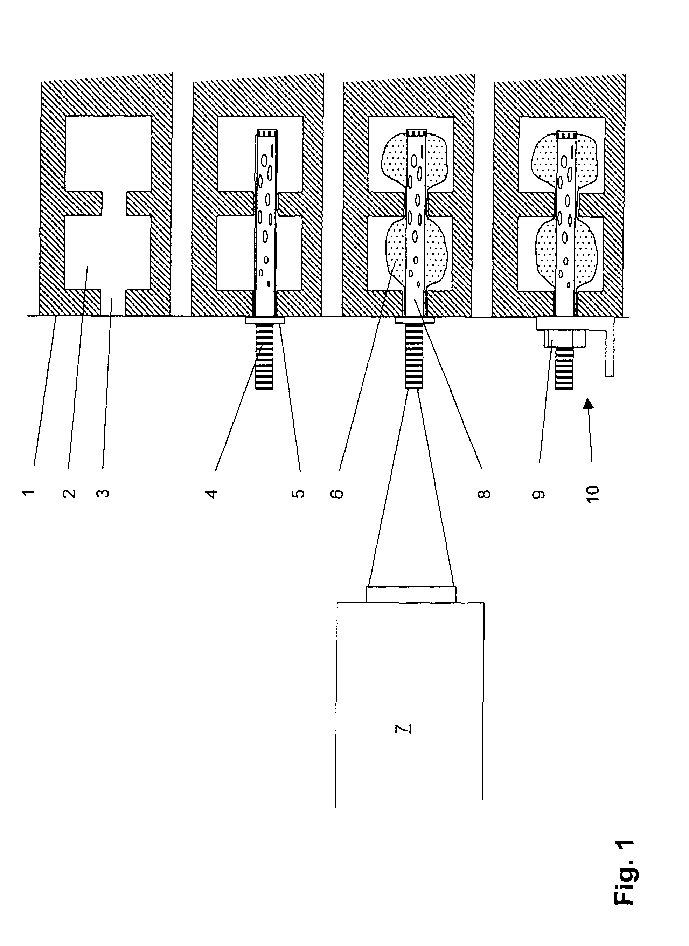

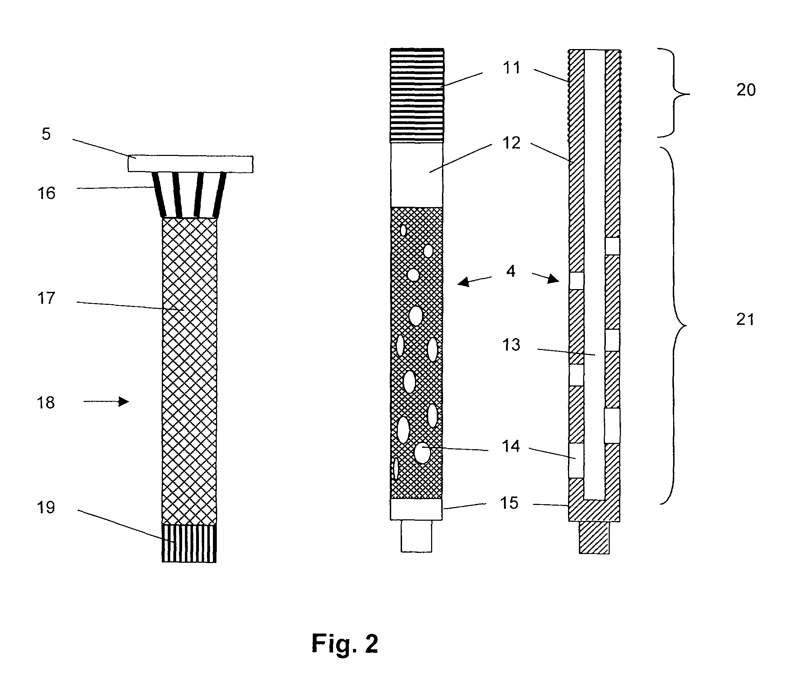

In Figur 1 sind untereinander in derselben Zeichnung vier Stadien der Herstellung eines Verbundankers mit Hilfe der erfindungsgemäßen Verbindungsvorrichtung dargestellt. Im obersten Teil der Abbildung ist ein Querschnitt durch eine Wand dargestellt, welche aus Kammersteinen 1 mit Hohlräumen 2 besteht. Als erster Schritt bei der Herstellung des Verbundankers wird in einen solchen Kammerstein eine (zylindrische) Bohrung 3 eingebracht. Im nächsten Schritt wird dann eine erfindungsgemäße Verbindungsvorrichtung in das Bohrloch eingeschoben. Diese Verbindungsvorrichtung besteht im dargestellten Beispiel aus einem Ankerbolzen 4 und einer Siebhülse 18. Der Aufbau dieser Elemente wird im folgenden mit Hilfe von Figur 2 näher erläutert.

Figur 2 zeigt in der mittleren Darstellung eine Seitenansicht des Ankerbolzens 4. Im rechten Teil der Figur ist ein Längsschnitt entlang der Achse des Ankerbolzens dargestellt. Bei dem Ankerbolzen 4 handelt es sich im wesentlichen um ein zylindrisches, stiftförmiges Element, welches vorzugsweise aus einem Metall hergestellt ist. Der Ankerbolzen unterteilt sich in einen Außenabschnitt 20 mit einem Außengewinde 11, wobei dieser Außenabschnitt außerhalb des Bauteils zu liegen kommt (vgl. Figur 1). Ferner besitzt der Ankerbolzen einen Innenabschnitt 21, welcher in das Bohrloch einzuführen ist. Auf dem Innenabschnitt 21 geht das Außengewinde 11 nicht durch, damit keine Schwächung des innen hohlen Ankerbolzens auftritt. Der Ankerbolzen ist an seinem vorderen Ende 15, mit welchem er in das Bohrloch eingeführt wird, etwas zugespitzt, um das Einführen zu erleichtern.

Die erfindungsgemäße Besonderheit des Ankerbolzens 4 besteht darin, daß dieser entlang seiner Längsachse eine Innenbohrung 13 aufweist. Diese führt in Form eines Sackloches vom Kopf des Ankerbolzens (Außenabschnitt 20) in den Innenabschnitt 21 und endet kurz vor der Spitze 15 des Ankerbolzens. Die Innenbohrung 13 hat nach außen Verbindung durch eine Vielzahl von Radialöffnungen 14, welche die Wand des Innenabschnittes 21 durchsetzen. Die Radialöffnungen 14 können dabei wie dargestellt ungleichmäßig über den Innenabschnitt 21 verteilt sein, wobei zur Spitze 15 des Ankerbolzens hin eine höhere Dichte und einen größeren Durchmesser aufweisen als in den näher am Kopf 20 gelegenen Abschnitten. Die Radialöffnungen haben typischerweise einen Durchmesser von 2 mm (oben) bzw. 2,5 mm (Mitte) bzw. 3 mm (unten).

Die Außenoberfläche des Innenabschnittes 21 ist vorzugsweise aufgerauht (angedeutet durch eine Schraffur in der mittleren Seitenansicht), damit eine Klebemasse gut hieran haften kann. Bei der Aufrauhung kann es sich um eine Rändelung handeln. Zu Beginn und am Ende des Innenabschnittes 21 befinden sich jedoch glatte Bereiche 12 und 15. Diese glatten Flächen sind für das Anspritzen vorteilhaft, damit beim Spritzguß keine Masse austritt.

Für eine derartige Anspritz-Befestigung kommen die beiden Fassungen 16 und 19 der Siebhülse 18 in Frage. Die Siebhülse 18 ist im linken Teil von Figur 2 dargestellt. Sie besteht im wesentlichen aus einem elastischen Schlauch 17, bei dem es sich um ein Gewebe handeln kann. An seinem unteren Ende ist dieser elastische Schlauch 17 durch eine Kunststoffendkappe 19 verschlossen. An seinem oberen Ende wird der Schlauch von einem ringförmigen Kragenelement 16 gefaßt. Bei den genannten Fassungen 16 und 19 kann es sich um Kunststoffteile handeln, in welche der Schlauch 17 eingespritzt ist. Weiterhin können diese Kunststoffteile bei der Herstellung der Verbindungsvorrichtung unmittelbar an die glatten Bereiche 12 bzw. 15 des Ankerbolzens 4 angespritzt werden. Hierdurch entsteht ohne größeren Aufwand eine feste Verbindung. Das Kragenelement 16 ist nach oben hin, d.h. von der Schlauchmitte weg, konisch erweitert. Vorzugsweise endet es in einem ringförmigen Flansch 5, der nach Art einer Unterlegscheibe außen auf dem Bohrloch aufsitzt. Weiterhin besitzt dieses Kragenelement 16 vorzugsweise nach außen stehende Rippen, mit denen es sich verdrehsicher in der Bohrlochmündung verankert. Durch die sternförmige Struktur mit Rippen bzw. Rillen im konusförmigen Teil 16 wird ferner erreicht, daß die Klebemasse auch zu den am Bohrloch anliegenden Bereichen des Konus 16 gelangt. Dies kann geschehen, da der elastische Schlauch 17 so grobmaschig ist, daß ein Teil der Klebemasse durch diesen gelangen und so in die Ritzen eindringen kann. Die Sternstruktur macht den Konus 16 auch elastischer, so daß dieser besser in das Bohrloch gesteckt werden kann.

Im folgenden wird die Beschreibung der Herstellung eines Verbundankers anhand von Figur 1 fortgesetzt. Nachdem der Ankerbolzen 4 zusammen mit der Siebhülse 18 in das Bohrloch 3 eingesetzt worden ist, wird auf die Öffnung der Axialbohrung 13 die Einfüllspitze einer Spritzvorrichtung 7 für Klebemasse aufgesetzt. Bei der Klebemasse handelt es sich vorzugsweise um einen Zweikomponentenmörtel aus einer Kartusche, wobei die beiden Komponenten mit einem Mischer in der Spitze der Einspritzvorrichtung gemischt und unter Druck in die Axialbohrung des Ankerbolzens 4 eingedrückt werden. Innerhalb des Ankerbolzens 4 bewegt sich die Klebemasse entlang der Axialbohrung 13 zur Spitze 15 des Ankerbolzens hin. Dabei tritt sie gleichzeitig durch die Radialöffnungen 14 nach außen in die Hohlräume 2 aus. Da sich in Richtung auf die Spitze des Ankerbolzens mehr bzw. größere Radialöffnungen 14 befinden, ist hier der Austritt der Klebemasse erleichtert. Dies gleicht den aufgrund des längeren zurückgelegten Weges geringeren Druck der Klebemasse in diesen Bereichen aus. Somit kommt es entlang der gesamten Achse des Ankerbolzens 4 zu einem gleichmäßigen Austritt von Klebemasse. Dabei kann die Klebemasse nicht unbegrenzt in die Hohlräume 2 austreten, da sie von dem elastischen Schlauch 17 zurückgehalten wird. Aufgrund seiner Elastizität kann sich der Schlauch jedoch erheblich ausdehnen, so daß die Klebemasse 6 in die Hohlräume 2 vordringen kann.

Wenn genügend Klebemasse in den Ankerbolzen eingespritzt worden ist, kann die Spritzvorrichtung 7 abgenommen werden. Das offene Ende der Axialbohrung 13 kann dann gegebenenfalls mit einer Schraubkappe verschlossen werden, um den Rückaustritt von Klebemasse zu verhindern. Der Klebemasse 6 wird sodann Zeit gelassen, auszuhärten. Nach Abschluß des Aushärtens kann, wie im unteren Teil von Figur 1 dargestellt, das außenliegende Gewinde 11 des Ankerbolzens für Befestigungszwecke benutzt werden. Z.B. können mit Hilfe einer Mutter 9 Haltewinkel hieran befestigt werden.

Die vorteilhafte Neuerung des erfindungsgemäßen Ankersystems besteht darin, daß statt einer massiven Schraube eine Art Rohr (Schraube mit Innenbohrung) verwendet wird. Für die erreichbaren Befestigungskräfte in den hohlen Bauteilen reicht die Stabilität der Schraube mit Innenbohrung aus. Die Herstellung eines Verbundankers ist mit diesem System höchst einfach: Loch bohren, Ankersystem einführen bzw. einschlagen und eine definierte Anzahl von Klebemassezügen einspritzen. Der Vorteil der erfindungsgemäßen Vorrichtung besteht darin, daß sie einfach, relativ preiswert und wegen der guten Verteilung der Klebemasse vor allem sehr zuverlässig ist. Das Bohrloch braucht nur wenig größer zu sein als der Durchmesser des Ankerbolzens. So ist beispielsweise bei einem M12-Ankerbolzen nur ein 14 mm Loch erforderlich. Bei Systemen aus dem Stand der Technik benötigt man dagegen für einen M10-Bolzen ein 15 mm Bohrloch, was den Bohraufwand und die Bohrerkosten erhöht und die Stabilität der Verbindung herabsetzt.

## Patentansprüche

1. Vorrichtung zur Erstellung eines Verbundankers in einem hohlen Bauteil, enthaltend einen Ankerbolzen mit einem Innenabschnitt, welcher im eingesetzten Zustand im Bauteil zu liegen kommt und dort durch eine in die Hohlräume des Bauteils eindringende Klebemasse fixiert wird, dadurch gekennzeichnet, daß der Ankerbolzen (4) eine Axialbohrung (13) sowie mindestens eine Radialöffnung (14) aufweist, wobei die Radialöffnung die Axialbohrung mit dem Äußeren des Ankerbolzens verbindet und im Bereich des Innenabschnittes (21) des Ankerbolzens angeordnet ist.

2. Vorrichtung nach Anspruch 1,
dadurch gekennzeichnet, daß der Ankerbolzen (4) mehrere in axialer Richtung über seinen Innenabschnitt (21) verteilte Radialöffnungen (14) aufweist.

3. Vorrichtung nach Anspruch 2,
dadurch gekennzeichnet, daß die axiale Verteilungsdichte und/oder der Durchmesser der Radialöffnungen (14) variiert, wobei vorzugsweise die Verteilungsdichte und/oder der Durchmesser zur Spitze (15) des Ankerbolzens hin zunehmen.

4. Vorrichtung nach einem der Ansprüche 1 bis 3,
dadurch gekennzeichnet, daß der Ankerbolzen (4) einen Außenabschnitt (20) aufweist, der im eingesetzten Zustand außerhalb des Bauteils (1) zu liegen kommt und für Befestigungszwecke nutzbar ist.

5. Vorrichtung nach einem der Ansprüche 1 bis 4,
dadurch gekennzeichnet, daß die Radialöffnungen (14) durch einen elastischen Schlauch (17) abgedeckt werden, wobei der Schlauch vorzugsweise an seinem Anfang und/oder Ende dicht mit dem Ankerbolzen (4) verbunden ist.

6. Vorrichtung nach Anspruch 5,
dadurch gekennzeichnet, daß der Schlauch (17) an mindestens einem Ende eine formstabile Fassung (16, 19) aufweist, welche mit dem Ankerbolzen (4) verbunden werden kann.

7. Vorrichtung nach Anspruch 6,
dadurch gekennzeichnet, daß eine der Fassungen als ein Kragen (16) ausgebildet ist, welcher in der Mündung des Bohrloches (3), in das der Ankerbolzen (4) eingesetzt wird, zu liegen kommt,
und daß dieser Kragen (16) in Richtung der Mündung des Bohrloches konisch aufgeweitet ist.

8. Vorrichtung nach Anspruch 7,
dadurch gekennzeichnet, daß der Kragen (16) an seiner Außenseite sternförmig angeordnete Rippen aufweist.

9. Vorrichtung nach einem der Ansprüche 1 bis 8,
dadurch gekennzeichnet, daß die Außenoberfläche des Innenabschnittes (21) des Ankerbolzens (4) ganz oder teilweise aufgerauht ist.

10. Vorrichtung nach einem der Ansprüche 1 bis 9,
dadurch gekennzeichnet, daß der Ankerbolzen (4) aus Metall, vorzugsweise aus Kupfer, Messing oder Stahl, hergestellt ist.
